(19) **Europäisches Patentamt**
**European Patent Office**
**Office européen des brevets**

(11) **EP 3 249 826 B1**

(12) **EUROPEAN PATENT SPECIFICATION**

(45) Date of publication and mention
of the grant of the patent:
**28.08.2019 Bulletin 2019/35**

(51) Int Cl.:
**H04B 7/06** (2006.01)    **H04B 7/04** (2017.01)

(86) International application number:
**PCT/CN2015/083770**

(21) Application number: **15878514.7**

(22) Date of filing: **10.07.2015**

(87) International publication number:
**WO 2016/115843 (28.07.2016 Gazette 2016/30)**

(54) **INDICATION INFORMATION CORRECTION METHOD, SYSTEM AND STORAGE MEDIUM**

ANZEIGEINFORMATIONSKORREKTURVERFAHREN, SYSTEM UND SPEICHERMEDIUM

PROCÉDÉ, SYSTÈME ET SUPPORT D'INFORMATIONS POUR LA CORRECTION
D'INFORMATIONS D'INDICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2015 CN 201510037162**

(43) Date of publication of application:
**29.11.2017 Bulletin 2017/48**

(73) Proprietor: **Sanechips Technology Co., Ltd.**
**Nanshan District**
**Shenzhen,**
**Guangdong 518055 (CN)**

(72) Inventors:
• **ZHANG, Junling**
**Shenzhen**
**Guangdong 518055 (CN)**

• **XIE, Jiling**
**Shenzhen**
**Guangdong 518055 (CN)**
• **LU, Tianji**
**Shenzhen**
**Guangdong 518055 (CN)**
• **LI, Qinxin**
**Shenzhen**
**Guangdong 518055 (CN)**

(74) Representative: **Arnold + Siedsma**
**Bezuidenhoutseweg 57**
**2594 AC The Hague (NL)**

(56) References cited:
**EP-A1- 2 378 689      WO-A1-2012/045143
WO-A2-02/078211      CN-A- 101 754 385
CN-A- 102 281 119      US-A1- 2008 069 281
US-A1- 2009 017 769      US-A1- 2009 141 819**

**Description**

**TECHNICAL FIELD**

The disclosure relates to an information processing technology in a Multiple-Input Multiple-Output (MIMO) receiver, and more particularly, to a method, system and storage medium for correcting indication information.

**BACKGROUND**

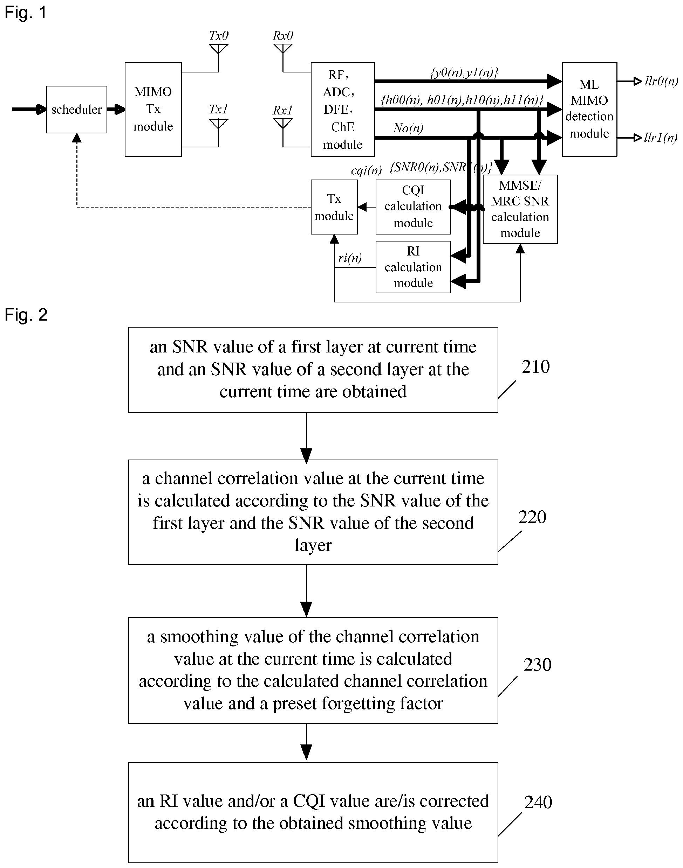

In a mobile communication system, MIMO is the basic technology widely used in 3GPP 4G. In the related art, a combination of MIMO and feedback is adopted to increase the channel capacity. Fig. 1 is a structure diagram of a traditional MIMO transmission-reception-feedback system, including a typical MIMO transmission, reception and feedback system based on 2x2 channel.

As shown in Fig. 1, a scheduler of a transmitter determines a Modulation and Coding Scheme (MCS) of transmission according to a Channel Quality Indicator (CQI) feedback sent by a receiver Tx; at the same time, the scheduler of the transmitter determines the number of layers of MIMO transmission according to a Rank Indicator (RI) feedback of the receiver. Generally, when the received RI, namely the number of layers, is 1, then the transmitter uses Space-Frequency Block Coding (SFBC) to transmit a layer of data at two Tx ports, so as to improve receiving reliability; when the number of layers RI is 2, then the transmitter uses Spatial Modulation (SM) to transmit two layers of data at two Tx ports, so as to improve channel throughput; next, an MIMO Tx module performs transmission at two Tx ports, e.g. Tx0 and Tx1. After two transmitted signals are received at two receiving ports Rx0 and Rx1 of the receiver through an air channel, received signals {y0(n), y1(n)} of two Rx ports at the time n generated by means of Radio Frequency (RF), Analog-Digital Conversion (ADC), Digital Front End (DFE) processing and Channel Estimation (ChE), channel estimation {h00(n),h01(n),h10(n),h11(n)} corresponding to each receiving-transmitting port, and noise power estimation No(n) at the time n, wherein y0(n) andy1(n) represent received signals of ports Rx0 and Rx1 respectively, and hij(n) represents channel estimation of receiving port i-receiving port j-transmitting port at the time n.

As shown in Fig. 1, in an MIMO detection branch, when the transmitted signal is two layers of MIMO signals, {y0(n), y1(n)}, {h00(n),h01(n),h10(n),h11(n)}, No(n) and MCS are output to a Maximum value Likelihood (ML) MIMO detection module, so as to form a log likelihood ration IIr0/1(n) of each bit of the two layers of signals; when the transmitted signal is one layer of MIMO signals, the MIMO detection module forms, according to an input, the log likelihood ration IIr0 of each bit of one layer of signals. In a feedback calculation branch, firstly, an RI calculation module calculates the most suitable number of MIMO layers RI for the current channel by using {h00(n),h01(n),h10(n),h11(n)} and No(n); at the same time, RI is sent to a Minimum value Mean Square Error (MMSE)/Maximum value Ratio Combining (MRC) Signal-to-Noise Ratio (SNR) calculation module and Tx module. When RI is calculated, it is needed to compare the capacity of single layer with the capacity of two layers under the current channel; when RI is 1, the SNR is calculated by using an MRC method; when RI is 2, the SNR is calculated by using an MMSE method.

Taking a 2x2 MIMO system as an example, the current channel is:

$$H(n) = \begin{pmatrix} h00(n) & h01(n) \\ h10(n) & h11(n) \end{pmatrix} \quad (1)$$

the current noise estimation is No(n), SNR0(n) and SNR1(n) of two layers are calculated by using the MMSE method:

$$SNRi(n) = \frac{1}{c_{ii}(n)} - 1, i = 0,1 \quad (2)$$

in the above formula:

$$\begin{pmatrix} c_{00}(n) & c_{01}(n) \\ c_{10}(n) & c_{11}(n) \end{pmatrix} = \left( \frac{H(n)^H H(n)}{No(n)} + I \right)^{-1} \quad (3)$$

when RI is 2, SNR0(n) and SNR1(n) of two layers are calculated by using the MMSE method and then output to a CQI calculation module, so as to calculate the CQIs of two layers, and finally the CQIs are sent to a scheduler module of the transmitter through a transmitting channel of the receiver and a receiving channel of the transmitter; when RI is 1, generally an MRC algorithm is used to calculate the SNR, and then the CQI is obtained.

In the above traditional modules for scheduling, MIMO transmission, MIMO receipt detection and feedback, especially when RI is 2, an MIMO detector generally uses ML detection with better performance, and for reducing the complexity, a CQI feedback module uses MMSE SNR calculation. According to the related literatures, the performance difference between an ML MIMO detection algorithm and an MMSE MIMO detection algorithm is different when H(n) has different channel correlations. For example, a performance gain of the ML MIMO detection algorithm compared with the MMSE MIMO detection algorithm under the high channel correlation is greater than the gain under the low channel correlation; the channel correlations of the MIMO channel H(n) are different because of the different designs of transmitting antenna, channels, and designs of receiving antenna. From the above, when RI is 2, the CQI feedback module of the receiver cannot keep accurate calculation of two layers of CQIs under different channel conditions and different transmitter-receiver combinations, thereby increasing the complexity of the scheduler of the transmitter and scheduling the MCS wrongly, and further reducing a transmitting-receiving link capacity. That is to say, there is no related technical solution provided in the related art to solve the problem of inaccurate CQI caused by the different channel correlations in the MIMO system.

According to WO2012045143A1, a method, computer program, device and system are provided for determining channel state information for use in a wireless communications network. The channel state information includes a rank indicator (RI), precoding matrix index (PMI) and channel quality indicator (CQI). The RI, PMI or CQI can be determined based on channel covariance estimation and the Taylor series approximation of its inverse. Further, the RI and PMI can be determined separately.

According to US2008069281 A1, the present invention comprises a method of statistical feedback for Multiple In-Multiple Out (MIMO) transmit beamforming comprising combining a short term channel state information and long term statistics in deriving a precoding matrix. At least one measurable parameter is observed, and a forgetting factor is determined based upon the observed parameter. According to EP2378689A1 a method and system are provided for feeding back channel state information at a MIMO receiver by decoding and determining an SNR for each of the data streams and computing a condensed SNR metric and a channel correlation.

## SUMMARY

In view of this, the disclosure is intended to provide a method, system and storage medium for correcting indication information, which can solve the problem of inaccurate CQI caused by different channel correlations in an MIMO system.

The features of the method and device according to the present disclosure are defined in the independent claims, and the preferable features according to the present invention are defined in the dependent claims.

According to the method, system and storage medium for correcting indication information provided in the disclosure, the channel correlation calculation module for estimating the channel correlation, and the RI correction module and the CQI correction module for correcting the RI and the CQI respectively are set at the receiver side; the channel correlation calculation module obtains the SNR value of the first layer and the SNR value of the second layer at the current time, estimates the channel correlation, and sends the estimated channel correlation to the RI correction module and the CQI correction module, and then the RI correction module and the CQI correction module correct the original output RI and/or CQI respectively. By using a channel correlation estimation result to correct the calculation result of the RI and/or CQI, the accuracy of the CQI can be improved, and the complexity of the scheduler in the MIMO system can be reduced, thereby solving the problem of inaccurate CQI caused by the different channel correlations in the MIMO system.

## BRIEF DESCRIPTION OF DRAWINGS

Fig. 1 is a structure diagram of a traditional MIMO transmission-reception-feedback system;

Fig. 2 is a flow chart of a method for correcting indication information according to an embodiment of the disclosure; and

Fig. 3 is a structure diagram of a system for correcting indication information according to an embodiment of the disclosure.

**DETAILED DESCRIPTION**

In an embodiment of the disclosure, a channel correlation calculation module for estimating a channel correlation, and an RI correction module and a CQI correction module for correcting RI and CQI respectively are set at a receiver side; the channel correlation calculation module obtains an SNR value of a first layer and an SNR value of a second layer at current time, estimates the channel correlation, and sends the estimated channel correlation to the RI correction module and the CQI correction module, and then the RI correction module and the CQI correction module correct the original output RI and/or CQI respectively.

The disclosure will be described below in combination with the accompanying drawings and specific embodiments in detail.

Embodiment 1

Fig. 2 is a flow chart of a method for correcting indication information according to an embodiment of the disclosure; as shown in Fig. 2, the method for correcting indication information includes the following steps.

Step S210: an SNR value of a first layer at current time and an SNR value of a second layer at the current time are obtained.

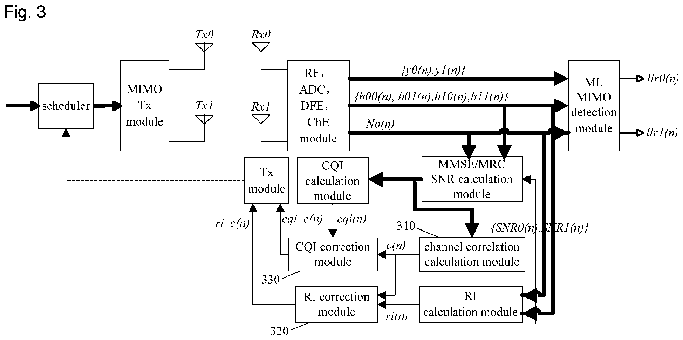

Here, when the current time is n and n is greater than or equal to 0, as shown in Fig. 3, an MMSE/MRC SNR calculation module at a receiver side calculates the SNR value of the first layer as SNR0(n) and the SNR value of the second layer as SNR1 (n).

Step S220: a channel correlation value at the current time is calculated according to the SNR value of the first layer and the SNR value of the second layer.

Here, the channel correlation value at the current time can be represented as $c'(n)$.

Specifically, the step that the channel correlation value at the current time is calculated according to the SNR value of the first layer and the SNR value of the second layer includes that: a value set of the SNR value of the first layer and the SNR value of the second layer is created, and a maximum value and a minimum value in the value set are obtained; a value obtained by dividing the maximum value by the minimum value is regarded as the channel correlation value at the current time.

That is to say, the channel correlation value at the current time can be represented as:

$$c'(n) = \min\{SNR0(n), SNR1(n)\} / \max\{SNR0(n), SNR1(n)\}$$.

Step S230: a smoothing value of the channel correlation value at the current time is calculated according to the calculated channel correlation value and a preset forgetting factor.

Here, the smoothing value of the channel correlation value at the current time can be represented as c(n), the forgetting factor can be represented as f, wherein 0<f<=1, and f is a decimal.

Specifically, the smoothing value is the sum of two multiplied values; one is obtained by multiplying the forgetting factor and the channel correlation value at the current time, the other is obtained by multiplying a value obtained by subtracting the forgetting factor from 1 and a smoothing value of a channel correlation value at previous time; wherein, the forgetting factor is a decimal which is greater than 0 and less than or equal to 1.

That is to say, the smoothing value of the channel correlation value at the current time can be represented as:

$$c(n) = f * c'(n) + (1 - f) * c(n-1)$$.

The values of both c(n) and c'(n) are greater than 0 and less than or equal to 1; the smaller the values of c(n) and c'(n) are, the higher the channel correlation is, and MIMO is more prone to that RI is 1.

Step S240: an RI value and/or a CQI value are/is corrected according to the obtained smoothing value.

Here, the step that the RI value and/or the CQI value are/is corrected according to the obtained smoothing value includes that: the RI value is calculated, and a correction value of the RI value is calculated according to the smoothing value;
or, the CQI value is calculated, and a correction value of the CQI value is calculated according to the smoothing value;
or, the RI value and the CQI value are calculated, and the correction value of the RI value and the correction value of the CQI value are calculated according to the smoothing value.

Specifically, the correction value of the RI value is the sum of the RI value and an RI threshold of the smoothing value.

Here, the RI value can be represented as ri(n), the correction value of the RI value can be represented as $ri_c(n)$, the RI threshold can be represented as t_ri{c(n)}, then the correction value of the RI value can be represented as $ri_c(n)$ = ri(n) + t_ri{c(n)}.

The RI threshold t_ri{c(n)} is a group of integers whose values are -1, 0, or 1; the group of integers is obtained by adjusting, based on the value of c(n), thresholds th1_ri, th2_ri and th3_ri according to the RI; they are represented as:

$$\text{t\_ri}\{c(n)\} = \begin{cases} 1, 0 < c(n) < \text{th1\_ri} \\ 0, \text{th1\_ri} < c(n) \leq \text{th2\_ri} \\ -1, \text{th2\_ri} < c(n) < \text{th3\_ri} \leq 1 \end{cases}$$

Specifically, the correction value of the CQI value is the sum of the CQI value and a CQI threshold of the smoothing value.

Here, the CQI value can be represented as cqi(n), the correction value of the CQI value can be represented as $cqi_c(n)$, the CQI threshold can be represented as t_cqi{c(n)}, then the correction value of the CQI value can be represented as $cqi_c(n)$ = cqi(n)+ t_cqi{c(n)}.

The CQI threshold t_cqi{c(n)} is a group of integers whose values are -2, -1, 0, 1 or 2; the group of integers is obtained by adjusting, based on the value of c(n), thresholds th1_cqi, th2_cqi, th3_cqi and th4_cqi according to the CQI; they are represented as:

$$\text{t\_cqi}\{c(n)\} = \begin{cases} -2, 0 < c(n) \leq \text{th1\_cqi} \\ -1, \text{th1\_cqi} < c(n) \leq \text{th2\_cqi} \\ 0, \text{th2}_{\text{cqi}} < c(n) \leq \text{th3\_cqi} \\ 1, \text{th3}_{\text{cqi}} < c(n) \leq \text{th4\_cqi} \\ 2, \text{th4}_{\text{cqi}} < c(n) \leq 1 \end{cases}$$

To sum up, in the present embodiment, the method for correcting indication information includes three manners: only correcting the RI value, or only correcting the CQI value, or correcting both the RI value and the CQI value. By using a channel correlation estimation result to correct the calculation result of the RI and/or CQI, the accuracy of the CQI can be improved, and the complexity of the scheduler in the MIMO system can be reduced, thereby solving the problem in the related art of inaccurate CQI caused by the different channel correlations.

Embodiment 2

Fig. 3 is a structure diagram of a system for correcting indication information according to an embodiment of the disclosure. As shown in Fig. 3, the system includes:
a channel correlation calculation module 310, which is configured to obtain an SNR value of a first layer at current time and an SNR value of a second layer at the current time, calculate a channel correlation value at the current time according to the SNR value of the first layer and the SNR value of the second layer, calculate a smoothing value of the channel correlation value at the current time according to the calculated channel correlation value and a preset forgetting factor, and send the smoothing value to an RI correction module 320 and/or a CQI correction module 330.

Specifically, as shown in Fig. 3, the channel correlation calculation module 310, which obtains the SNR value of the first layer at the current time and the SNR value of the second layer at the current time, is configured to receive the SNR value of the first layer and the SNR value of the second layer output by an MMSE/MRC SNR calculation module.

The channel correlation calculation module 310, which calculates the channel correlation value at the current time according to the SNR value of the first layer and the SNR value of the second layer, is configured to create a value set of the SNR value of the first layer and the SNR value of the second layer, and obtain a maximum value and a minimum value in the value set; and regard a value obtained by dividing the maximum value by the minimum value as the channel correlation value at the current time.

That is to say, the channel correlation value at the current time can be represented as:

$$c'(n) = \min\{SNR0(n), SNR1(n)\} / \max\{SNR0(n), SNR1(n)\}$$

The smoothing value is the sum of two multiplied values; one is obtained by multiplying the forgetting factor and the channel correlation value at the current time, the other is obtained by multiplying a value obtained by subtracting the forgetting factor from 1 and a smoothing value of a channel correlation value at previous time; wherein, the forgetting factor is a decimal which is greater than 0 and less than or equal to 1.

That is to say, the smoothing value of the channel correlation value at the current time can be represented as:

$$c(n) = f * c'(n) + (1-f) * c(n-1)$$ .

The RI correction module 320 is configured to calculate a correction value of an RI value according to the smoothing value.

Here, the correction value of the RI value which is calculated according to the smoothing value is the sum of the RI value and an RI threshold of the smoothing value; wherein the RI threshold is -1, 0, or 1.

Here, the RI value can be represented as $ri(n)$, the correction value of the RI value can be represented as $ri_c(n)$, the RI threshold can be represented as $t\_ri\{c(n)\}$, then the correction value of the RI value can be represented as $ri_c(n) = ri(n) + t\_ri\{c(n)\}$.

The CQI correction module 330 is configured to calculate a correction value of a CQI value according to the smoothing value.

Here, the correction value of the CQI value which is calculated according to the smoothing value is the sum of the CQI value and a CQI threshold of the smoothing value; wherein the CQI threshold is -2, -1, 0, 1, or 2.

Here, the CQI value can be represented as $cqi(n)$, the correction value of the CQI value can be represented as $cqi_c(n)$, the CQI threshold can be represented as $t\_cqi\{c(n)\}$, then the correction value of the CQI value can be represented as $cqi_c(n) = cqi(n) + t\_cqi\{c(n)\}$.

Please be noted that, all above embodiments can be applied to a situation where the number of transmission layers in the MIMO system of any NxN channel is 2, where the N can be any integer, e.g. 2, 3, 4 and so on.

All of the channel correlation calculation module 310, the RI correction module 320 and the CQI correction module 330 in the system for correcting indication information in the disclosure can be realized by a processor at the receiver side; certainly, they can also be realized by a specific logical circuit; wherein the processor can be on a mobile terminal or a server; in practical applications, the processor can be a Central Processing Unit (CPU), a Micro Processor Unit (MPU), a Digital Signal Processor (DSP), or a Field Programmable Gate Array (FPGA).

In an embodiment of the disclosure, if the method for correcting indication information is implemented by software function modules, and the software function modules are sold or used as independent products, they can also be stored in a computer readable storage medium. Based on this understanding, the technical solutions in the embodiments of the disclosure substantially or the part making a contribution to the related art can be embodied in the form of software product; the computer software product is stored in a storage medium and includes a number of instructions to make a computer device (which can be a personal computer, a server or a network device, etc.) perform all or part of the method in each embodiment of the disclosure. The above storage medium includes: a USB flash disk, a mobile hard disk, a Read Only Memory (ROM), a magnetic disk or a compact disc, and other media which can store program codes. In this way, the disclosure is not limited to any particular combination of hardware and software.

Correspondingly, an embodiment of the disclosure also provides a computer storage medium, in which a computer program is stored; the computer program is used for performing the method for correcting indication information in above embodiment of the disclosure.

The above is only preferred embodiments of the disclosure and not intended to limit the scope of protection of the disclosure.

**Claims**

1. A method for correcting indication information, at a Maximum Likelihood ML MIMO receiver **characterized in that** the method comprises:

   obtaining (210) a Signal-to-Noise Ratio, SNR, value of a first layer at current time and an SNR value of a second layer at the current time; using a Minimum Mean Square Error MMSE or Maximum Ratio Combining MRC method;
   calculating (220) a channel correlation value at the current time according to the SNR value of the first layer and the SNR value of the second layer;
   calculating (230) a smoothing value of the channel correlation value at the current time according to the calculated channel correlation value and a preset forgetting factor;

correcting (240) a Rank Indicator, RI, value and/or a Channel Quality Indicator, CQI, value according to the obtained smoothing value;

wherein the step of calculating the channel correlation value at the current time according to the SNR value of the first layer and the SNR value of the second layer comprises:

creating a value set of the SNR value of the first layer and the SNR value of the second layer, and obtaining a maximum value and a minimum value in the value set;

regarding a value obtained by dividing the minimum value by the maximum value as the channel correlation value at the current time;

wherein the smoothing value is a sum of two multiplied values; one multiplied value is obtained by multiplying the forgetting factor and the channel correlation value at the current time, other multiplied value is obtained by multiplying a value obtained by subtracting the forgetting factor from 1 and a smoothing value of a channel correlation value at previous time;

wherein, the forgetting factor is a decimal which is greater than 0 and less than or equal to 1.

2. The method according to claim 1, wherein the step of correcting the RI value and/or the CQI value according to the obtained smoothing value comprises:

calculating the RI value, and calculating a correction value of the RI value according to the smoothing value; or, calculating the CQI value, and calculating a correction value of the CQI value according to the smoothing value; or, calculating the RI value and the CQI value, and calculating the correction value of the RI value and the correction value of the CQI value according to the smoothing value.

3. The method according to claim 2, wherein the correction value of the RI value is a sum of the RI value and an RI threshold of the smoothing value; wherein the RI threshold is -1, 0, or 1.

4. The method according to claim 2, wherein the correction value of the CQI value is a sum of the CQI value and a CQI threshold of the smoothing value; wherein the CQI threshold is -2, -1, 0, 1, or 2.

5. A system for correcting indication information, at a Maximum Likelihood ML MIMO receiver **characterized in that** the system comprises:

a channel correlation calculation module (310), which is configured to obtain a Signal-to-Noise Ratio, SNR, value of a first layer at current time and an SNR value of a second layer at the current time, calculate a channel correlation value at the current time according to the SNR value of the first layer and the SNR value of the second layer, using a Minimum Mean Square Error MMSE or Maximum Ratio Combining MRC SNR calculation module, calculate a smoothing value of the channel correlation value at the current time according to the calculated channel correlation value and a preset forgetting factor, and send the smoothing value to a Rank Indicator, RI, correction module (320) and/or a Channel Quality Indicator, CQI, correction module (330);

the RI correction module (320) is configured to calculate a correction value of an RI value according to the smoothing value;

the CQI correction module (330) is configured to calculate a correction value of a CQI value according to the smoothing value;

wherein the channel correlation calculation module (310), which calculates the channel correlation value at the current time according to the SNR value of the first layer and the SNR value of the second layer, is configured to:

create a value set of the SNR value of the first layer and the SNR value of the second layer, and obtain a maximum value and a minimum value in the value set;

regard a value obtained by dividing the minimum value by the maximum value as the channel correlation value at the current time;

, wherein the smoothing value is a sum of two multiplied values; one multiplied value is obtained by multiplying the forgetting factor and the channel correlation value at the current time, other multiplied value is obtained by multiplying a value obtained by subtracting the forgetting factor from 1 and a smoothing value of a channel correlation value at previous time;

wherein, the forgetting factor is a decimal which is greater than 0 and less than or equal to 1.

6. The system according to claim 5, wherein the correction value of the RI value is a sum of the RI value and an RI threshold of the smoothing value; wherein the RI threshold is -1, 0, or 1.

7. The system according to claim 5, wherein the correction value of the CQI value is a sum of the CQI value and a CQI threshold of the smoothing value; wherein the CQI threshold is -2, -1, 0, 1, or 2.

8. A computer storage medium, in which a computer executable instruction is stored; the computer executable instruction is used for performing the method for correcting indication information according to any one of claims 1 to 4.

**Patentansprüche**

1. Verfahren zum Korrigieren von Anzeigeinformationen bei einem Maximum-Likelihood-MIMO-Empfänger (ML-MIMO-Empfänger), **dadurch gekennzeichnet, dass** das Verfahren Folgendes umfasst:

   Erhalten (210) eines SNR-Wertes (Signal-to-Noise Ratio, Signal-zu-Rauschen-Verhältnis-Wert) einer ersten Schicht zu der aktuellen Zeit und eines SNR-Wertes einer zweiten Schicht zu der aktuellen Zeit unter Verwendung einer MMSE- (Minimum Mean Square Error, Minimierung des mittleren quadratischen Fehlers) oder einer MRC-Methode (Maximum Ratio Combining, Maximal verhältnis-Kombination);
   Berechnen (220) eines Kanalkorrelationswertes zu der aktuellen Zeit gemäß dem SNR-Wert der ersten Schicht und dem SNR-Wert der zweiten Schicht;
   Berechnen (230) eines Glättungswertes des Kanalkorrelationswertes zu der aktuellen Zeit gemäß dem berechneten Kanalkorrelationswert und einem voreingestellten Gedächtnisfaktor;
   Korrigieren (240) eines RI-Wertes (Rank Indicator, Ranganzeiger) und/oder eines CQI-Wertes (Channel Quality Indicator, Kanalqualitätsanzeiger) gemäß dem erhaltenen Glättungswert;
   wobei der Schritt des Berechnens des Kanalkorrelationswertes zu der aktuellen Zeit gemäß dem SNR-Wert der ersten Schicht und dem SNR-Wert der zweiten Schicht Folgendes umfasst:

      Erzeugen eines Wertesatzes aus dem SNR-Wert der ersten Schicht und dem SNR-Wert der zweiten Schicht, und Erhalten eines Maximalwertes und eines Minimalwertes in dem Wertesatz;
      Betrachten eines Wertes, der erhalten wird, indem der Minimalwert durch den Maximalwert dividiert wird, als den Kanalkorrelationswert zu der aktuellen Zeit;
      wobei der Glättungswert eine Summe aus zwei multiplizierten Werten ist; wobei ein multiplizierter Wert durch Multiplizieren des Gedächtnisfaktors mit dem Kanalkorrelationswert zu der aktuellen Zeit erhalten wird und der andere multiplizierte Wert durch Multiplizieren eines Wertes, der durch Subtrahieren des Gedächtnisfaktors von 1 erhalten wird, mit einem Glättungswert eines Kanalkorrelationswerts zu einer vorherigen Zeit erhalten wird;
      wobei es sich bei dem Gedächtnisfaktor um eine Dezimalstelle handelt, die größer als 0 und kleiner als oder gleich 1 ist.

2. Verfahren nach Anspruch 1, wobei der Schritt des Korrigierens des RI-Wertes und/oder des CQI-Wertes gemäß dem erhaltenen Glättungswert Folgendes umfasst:

   Berechnen des RI-Wertes und Berechnen eines Korrekturwertes des RI-Wertes gemäß dem Glättungswert; oder
   Berechnen des CQI-Wertes und Berechnen eines Korrekturwertes des CQI-Wertes gemäß dem Glättungswert; oder
   Berechnen des RI-Wertes und des CQI-Wertes, und Berechnen des Korrekturwertes des RI-Wertes und des Korrekturwertes des CQI-Wertes gemäß dem Glättungswert.

3. Verfahren nach Anspruch 2, wobei der Korrekturwert des RI-Wertes eine Summe des RI-Wertes und eines RI-Schwellenwertes des Glättungswerts ist; wobei der RI-Schwellenwert gleich -1, 0 oder 1 ist.

4. Verfahren nach Anspruch 2, wobei der Korrekturwert des CQI-Wertes eine Summe des CQI-Wertes und eines CQI-Schwellenwertes des Glättungswerts ist; wobei der CQI-Schwellenwert gleich -2, -1, 0, 1 oder 2 ist.

5. System zum Korrigieren von Anzeigeinformationen bei einem Maximum-Likelihood-MIMO-Empfänger (ML-MIMO-Empfänger), **dadurch gekennzeichnet, dass** das System Folgendes umfasst:

   ein Kanalkorrelationsberechnungsmodul (310), das zu Folgendem ausgelegt ist: Erhalten eines SNR-Wertes (Signal-to-Noise Ratio, Signal-zu-Rauschen-Verhältnis-Wert) einer ersten Schicht zu der aktuellen Zeit und eines SNR-Wertes einer zweiten Schicht zu der aktuellen Zeit, Berechnen eines Kanalkorrelationswertes zu der aktuellen Zeit gemäß dem SNR-Wert der ersten Schicht und dem SNR-Wert der zweiten Schicht unter Verwendung eines MMSE- (Minimum Mean Square Error, Minimisierung des mittleren quadratischen Fehlers) oder eines MRC-Berechnungsmoduls (Maximum Ratio Combining, Maximalverhältnis-Kombination); Berechnen eines Glättungswertes des Kanalkorrelationswertes zu der aktuellen Zeit gemäß dem berechneten Kanalkorrelationswert und einem voreingestellten Gedächtnisfaktor, und Senden des Glättungswertes an ein Ranganzeiger- (RI) Korrekturmodul (320) und/oder ein Kanalqualitätsanzeiger- (CQI) Korrekturmodul (330);

das RI-Korrekturmodul (320), das dazu ausgelegt ist, einen Korrekturwert eines RI-Wertes gemäß dem Glättungswert zu berechnen;

das CQI-Korrekturmodul (330), das dazu ausgelegt ist, einen Korrekturwert eines CQI-Wertes gemäß dem Glättungswert zu berechnen;

wobei das Kanalkorrelationskorrekturmodul (310), das den Kanalkorrelationswert zu der aktuellen Zeit gemäß dem SNR-Wert der ersten Schicht und dem SNR-Wert der zweiten Schicht berechnet, zu Folgendem ausgelegt ist:

Erzeugen eines Wertesatzes aus dem SNR-Wert der ersten Schicht und dem SNR-Wert der zweiten Schicht, und Erhalten eines Maximalwertes und eines Minimalwertes in dem Wertesatz;

Betrachten eines Wertes, der erhalten wird, indem der Minimalwert durch den Maximalwert dividiert wird, als den Kanalkorrelationswert zu der aktuellen Zeit;

wobei der Glättungswert eine Summe aus zwei multiplizierten Werten ist; wobei ein multiplizierter Wert durch Multiplizieren des Gedächtnisfaktors mit dem Kanalkorrelationswert zu der aktuellen Zeit erhalten wird und der andere multiplizierte Wert durch Multiplizieren eines Wertes, der durch Subtrahieren des Gedächtnisfaktors von 1 erhalten wird, mit einem Glättungswert eines Kanalkorrelationswerts zu einer vorherigen Zeit erhalten wird;

wobei es sich bei dem Gedächtnisfaktor um eine eine Dezimalstelle handelt, die größer als 0 und kleiner als oder gleich 1 ist.

6. System nach Anspruch 5, wobei der Korrekturwert des RI-Wertes eine Summe des RI-Wertes und eines RI-Schwellenwertes des Glättungswerts ist; wobei der RI-Schwellenwert gleich - 1, 0 oder 1 ist.

7. System nach Anspruch 5, wobei der Korrekturwert des CQI-Wertes eine Summe des CQI-Wertes und eines CQI-Schwellenwertes des Glättungswerts ist; wobei der CQI-Schwellenwert gleich -2, -1, 0, 1 oder 2 ist.

8. Computerspeichermedium, in dem eine computerausführbare Anweisung gespeichert ist; wobei die computerausführbare Anweisung zum Ausführen des Verfahrens zum Korrigieren von Anzeigeinformationen nach einem der Ansprüche 1 bis 4 verwendet wird.

**Revendications**

1. Procédé de correction d'informations d'indication, au niveau d'un récepteur MIMO à maximum de vraisemblance (ML, maximum likelihood), **caractérisé en ce que** le procédé comprend :

l'obtention (210) de la valeur du rapport signal sur bruit (SNR) d'une première couche à un instant actuel et de la valeur SNR d'une deuxième couche à l'instant actuel, au moyen d'une technique de minimisation de l'erreur quadratique moyenne (MMSE, Minimum Mean Square Error) ou de combinaison par rapport maximal (MRC, Maximum Ratio Combining),

le calcul (220) d'une valeur de corrélation de canal à l'instant actuel conformément à la valeur du SNR de la première couche et à la valeur du SNR de la deuxième couche,

le calcul (230) d'une valeur de lissage de la valeur de corrélation de canal à l'instant actuel conformément à la valeur de corrélation de canal calculée et à un facteur d'oubli prédéfini,

la correction (240) d'une valeur d'indicateur de rang (IR) et/ou d'une valeur d'indicateur de qualité de canal (IQC) conformément à la valeur de lissage obtenue ;

ladite étape de calcul de la valeur de corrélation de canal à l'instant actuel conformément à la valeur du SNR de la première couche et à la valeur du SNR de la deuxième couche comprenant :

la création d'un ensemble de valeurs composé de la valeur du SNR de la première couche et de la valeur du SNR de la deuxième couche, et l'obtention d'une valeur maximale et d'une valeur minimale au sein de l'ensemble de valeurs,

la considération d'une valeur, obtenue en divisant la valeur minimale par la valeur maximale, comme valeur de corrélation de canal à l'instant actuel ;

ladite valeur de lissage consistant en la somme de deux valeurs multipliées ; une valeur multipliée étant obtenue en multipliant le facteur d'oubli par la valeur de corrélation de canal à l'instant actuel, l'autre valeur multipliée étant obtenue en multipliant une valeur, obtenue en soustrayant le facteur d'oubli de 1, par une valeur de lissage d'une valeur de corrélation de canal d'un instant précédent ;

ledit facteur d'oubli étant un décimal qui est supérieur à 0 et inférieur ou égal à 1.

2. Procédé selon la revendication 1, dans lequel l'étape de correction de la valeur d'IR et/ou de la valeur d'IQC conformément à la valeur de lissage obtenue comprend :

le calcul de la valeur d'IR et le calcul d'une valeur de correction de la valeur d'IR conformément à la valeur de lissage, ou

le calcul de la valeur d'IQC et le calcul d'une valeur de correction de la valeur d'IQC conformément à la valeur de lissage, ou

le calcul de la valeur d'IR et de la valeur d'IQC et le calcul de la valeur de correction de la valeur d'IR et de la valeur de correction de la valeur d'IQC conformément à la valeur de lissage.

3. Procédé selon la revendication 2, dans lequel la valeur de correction de la valeur d'IR consiste en la somme de la valeur d'IR et d'un seuil d'IR de la valeur de lissage ; ledit seuil d'IR valant -1, 0 ou 1.

4. Procédé selon la revendication 2, dans lequel la valeur de correction de la valeur d'IQC consiste en la somme de la valeur d'IQC et d'un seuil d'IQC de la valeur de lissage ; ledit seuil d'IQC valant -2, -1, 0, 1 ou 2.

5. Système de correction d'informations d'indication, au niveau d'un récepteur MIMO à maximum de vraisemblance (ML, maximum likelihood), **caractérisé en ce que** le système comprend :

un module de calcul de corrélation de canal (310), conçu pour obtenir la valeur du rapport signal sur bruit (SNR) d'une première couche à un instant actuel et la valeur SNR d'une deuxième couche à l'instant actuel, pour calculer une valeur de corrélation de canal à l'instant actuel conformément à la valeur du SNR de la première couche et à la valeur du SNR de la deuxième couche, au moyen d'un module de calcul de SNR par minimisation de l'erreur quadratique moyenne (MMSE, Minimum Mean Square Error) ou par combinaison par rapport maximal (MRC, Maximum Ratio Combining), pour calculer une valeur de lissage de la valeur de corrélation de canal à l'instant actuel conformément à la valeur de corrélation de canal calculée et à un facteur d'oubli prédéfini, et pour envoyer la valeur de lissage à un module de correction d'indicateur de rang (IR) (320) et/ou un module de correction d'indicateur de qualité de canal (IQC) (330),

le module de correction d'IR (320) conçu pour calculer une valeur de correction d'une valeur d'IR conformément à la valeur de lissage,

le module de correction d'IQC (330) conçu pour calculer une valeur de correction d'une valeur IQC conformément à la valeur de lissage ;

ledit module de calcul de corrélation de canal (310), qui calcule la valeur de corrélation de canal à l'instant actuel conformément à la valeur du SNR de la première couche et à la valeur du SNR de la deuxième couche, étant conçu pour :

créer un ensemble de valeurs composé de la valeur du SNR de la première couche et de la valeur du SNR de la deuxième couche, et obtenir la valeur maximale et la valeur minimale au sein de l'ensemble de valeurs, considérer une valeur, obtenue en divisant la valeur minimale par la valeur maximale, comme valeur de corrélation de canal à l'instant actuel ;

ladite valeur de lissage consistant en la somme de deux valeurs multipliées ; une valeur multipliée étant obtenue en multipliant le facteur d'oubli par la valeur de corrélation de canal à l'instant actuel, l'autre valeur multipliée étant obtenue en multipliant une valeur, obtenue en soustrayant le facteur d'oubli de 1, par une valeur de lissage d'une valeur de corrélation de canal d'un instant précédent ;

ledit facteur d'oubli étant un décimal qui est supérieur à 0 et inférieur ou égal à 1.

6. Système selon la revendication 5, dans lequel la valeur de correction de la valeur d'IR consiste en la somme de la valeur d'IR et d'un seuil d'IR de la valeur de lissage ; ledit seuil d'IR valant -1, 0 ou 1.

7. Système selon la revendication 5, dans lequel la valeur de correction de la valeur d'IQC consiste en la somme de la valeur d'IQC et d'un seuil d'IQC de la valeur de lissage ; ledit seuil d'IQC valant -2, -1, 0, 1 ou 2.

8. Support d'enregistrement informatique sur lequel est enregistré une instruction exécutable par ordinateur ; l'instruction exécutable par ordinateur servant à mettre en oeuvre le procédé de correction d'informations d'indication selon l'une quelconque des revendications 1 à 4.

Fig. 1

Fig. 2

an SNR value of a first layer at current time and an SNR value of a second layer at the current time are obtained

210

a channel correlation value at the current time is calculated according to the SNR value of the first layer and the SNR value of the second layer

220

a smoothing value of the channel correlation value at the current time is calculated according to the calculated channel correlation value and a preset forgetting factor

230

an RI value and/or a CQI value are/is corrected according to the obtained smoothing value

240

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012045143 A1
- US 2008069281 A1
- EP 2378689 A1